# EUROPEAN PATENT APPLICATION

(11) **EP 0 999 077 A1**
(43) Date of publication of application: **10.05.2000**
(21) Application number: 99122258.9
(22) Date of filing: 08.11.1999
(51) Int. Cl.: B60G 7/00, B23K 9/028, B23K 10/02, B23K 15/00

(54) **An arm member**

(30) Priority: 06.11.1998 JP 31639998
(71) Applicant: SHOWA ALUMINUM KABUSHIKI KAISHA, Sakaishi Osaka (JP)
(72) Inventor: Kato, Rentaro, Kasugai-shi, Aichi-ken (JP); Ogawa, Yuichi, Kasugai-shi, Aichi-ken (JP); Jogan, Shigetoshi, Kishiwadashi, Osaka (JP); Yamanoi, Tomoaki, Sakaishi, Osaka (JP)
(74) Representative: Viering, Jentschura & Partner

(57) **Abstract**

An arm member is used as an automobile suspension arm, for example. The arm member includes a main body made of a metallic pipe having an end, and a metallic joining portion integrally provided with a connecting portion having an end in which a concave portion is formed. The end of the connecting portion is butted to the end of the main body with the concave portion facing an end opening of the main body to form a butted portion, and the butted portion is welded along a whole circumference thereof. Thus, the main body is firmly joined to the joining portion.

## Description

### BACKGROUND OF THE INVENTION

### 1. Field of the Invention

This invention relates to an arm member used for an automobile suspension arm, an engine mount or the like, and more particularly relates to an arm member having a joining portion to be joined to another member.

In this specification, the word "aluminum" denotes an aluminum and its alloy.

### 2. Description of the Related Art

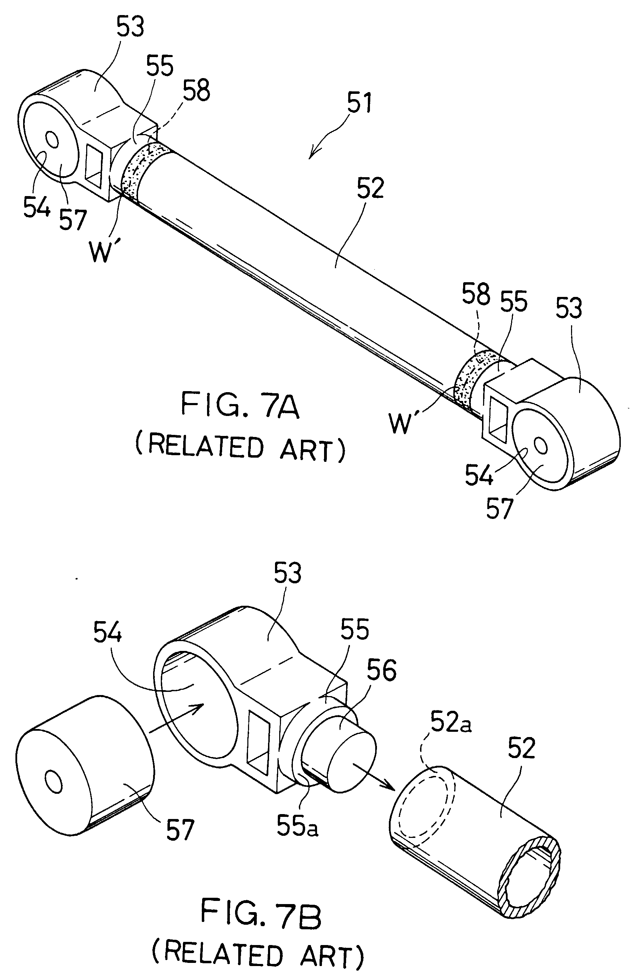

Fig. 7 illustrates an arm member used for an automobile suspension arm 51 such as an upper arm, a lower arm, a trailing arm and a torsion arm.

The arm member 51 is provided with a main body 52 made of a metallic pipe member having a circular cross-sectional shape with a certain length and two bush mounting portions 53, 53 connected to the opposite ends of the main body 52 for mounting a vibro-isolating bush 57. The main body 52 is made of a pipe member so as to attain a lightweight arm member 51.

As shown in Fig. 7A, the bush mounting portion 53 has a bush mounting bore 54 of a circular cross-sectional shape in which a cylindrical vibro-isolating bush 57 with a rubber elastic portion is forcibly fitted. The bush mounting portion 53 is used for connecting another member (not shown) by way of the vibro-isolating bush 57 mounted in the bush mounting bore 54.

The bush mounting portion 53 has a columnar connecting portion 55 integrally protruded from a part of the outer peripheral surface of the bush mounting portion 53. Integrally protruded from the central portion of the end 55a of the connecting portion 55 is a fitting portion 56 of a circular cross-sectional shape with a diameter smaller than that of the connecting portion 55.

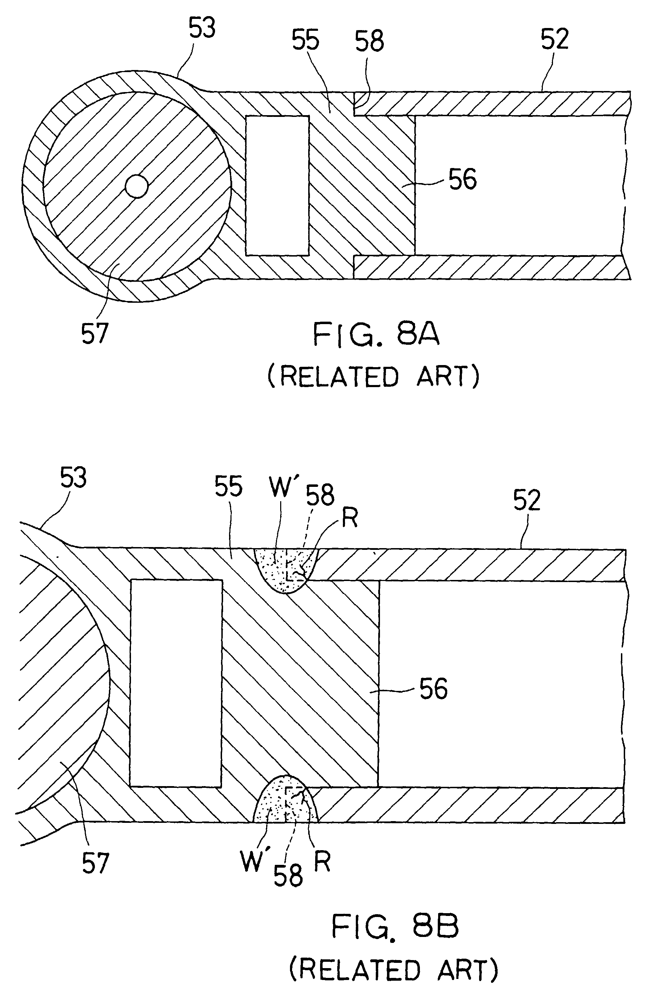

The bush mounting portion 53 is connected to the main body 52 as follows. As shown in Figs. 7B and 8A, the fitting portion 56 is inserted into the end opening of the main body 52 until the end 55a of the connecting portion 55 butts against the end 52a of the main body 52. Thereafter, as shown in Fig. 8B, the butted portion 58 where the end 55a of the connecting portion 55 butts against the end 52a of the main body 52, is welded along the circumference of the butted portion 58. In Figs. 7A and 8B, the reference letter W' denotes a welded portion formed along the whole circumference of the butted portion 58.

However, in a case where the end 55a of the connecting portion 55 is welded to the end 52a of the main body 52 with the fitting portion 56 inserted in the end opening of the main body 52, root cracks R may be generated from the border between the fitting portion 56 and the main body 52 at the welded portion W'. As a result, the root cracks R cause reduced joining strength and low strength reliability of the arm member 51.

### SUMMARY OF THE INVENTION

It is an object of the present invention to provide a lightweight arm member having a main body and a joining portion firmly connected each other.

The other objects of the present invention will be apparent from the following preferred embodiments.

To attain the aforementioned first object, according to the present invention, an arm member includes a main body made of a metallic pipe having an end, a metallic joining portion integrally provided with a connecting portion having an end in which a concave portion is formed, wherein the end of the connecting portion is butted against the end of the main body with the concave portion facing an end of opening of the main body to form a butted portion, and wherein the butted portion is welded along a whole circumference thereof, whereby the joining portion is joined to the main body.

With this structure, in a state that the end of the connecting portion is butted against the end of the main body, a hollow portion is formed by the concave portion of the connecting portion and the end opening of the main body so as to cross the butted portion. Therefore, the hollow portion impedes a generation of root cracks at a welded portion of the butted portion, resulting in enhanced connecting strength. Furthermore, since the main body is made of a pipe member, the arm member is light in weight. In short, according to the present invention, it is possible to provide a lightweight arm member in which the connecting portion and the main body are firmly joined to have excellent strength reliability.

The butted portion may be welded by a fusion welding such as an arc welding, a plasma welding, a laser welding and an electron beam welding. Even in cases where the butted portion is welded by the fusion welding, since the hollow portion is formed so as to cross the butted portion, a generation of root cracks can be prevented at the welded portion.

It is preferable that the arm member is provided with an air releasing aperture at a part of a peripheral wall of the connecting portion or the main body so as to communicate the hollow portion with an outside. The reason for providing the air releasing aperture is as follows: In cases where the butted portion is welded, shield gas is generally used to avoid the oxidation of the welded portion. During the welding process of the butted portion, some of the gas is introduced into the hollow portion through a gap of the butted portion, therefore, the air in the hollow portion flows out through the air releasing aperture. As a result, the air in the hollow portion is replaced with the shield gas, and the rear surface of the welded portion is prevented from being oxidized. Accordingly, a welding default such as a blowhole will not be generated at the welded portion, which results in increased high joining strength.

It is preferable that at least an end of the connecting portion has an outer diameter generally the same as that of the main body.

It is preferable that an end of the concave portion has an inner diameter generally the same as that of the end opening of the main body.

The joining portion may be a bush mounting portion for mounting a bush.

The joining portion may also be a ball joint mounting portion for mounting a ball joint.

It is preferable that the joining portion is provided with a yoke portion.

It is preferable that the pipe member is made of an aluminum or its alloy for the purpose of lightening the arm member.

It is preferable that the joining portion is made of an aluminum or its alloy for the purpose of lightening the arm member.

### BRIEF DESCRIPTION OF DRAWINGS

The above and other objects, features, and advantages of the present invention will be apparent from the following detailed description of the preferred embodiments with reference to the attached drawings, wherein:
Fig. 1 is a perspective view of an arm member according to a first embodiment of the present invention;
Fig. 2 is a perspective exploded view of the arm member shown in Fig. 1;
Fig. 3 is a cross-sectional view showing the butted portion of the arm member shown in Fig. 1 before welding;
Fig. 4A is a cross-sectional view showing the butted portion of the arm member shown in Fig. 1 during welding;
Fig. 4B is a cross-sectional view showing the butted portion of the arm member shown in Fig. 1 after welding;
Fig. 5A is a perspective view showing a second embodiment of the present invention in which a ball joint portion (joining portion) is provided;
Fig. 5B is a cross-sectional view of the welded portion of the arm member shown in Fig. 5A;
Fig. 6A is a perspective exploded view of a third embodiment of the present invention in which a yoke portion (joining portion) is provided;
Fig. 6B is a cross-sectional view of the welded portion of the arm member shown in Fig. 6A;
Fig. 7A is a perspective view of an arm member as a related art;
Fig. 7B is an perspective exploded view of the arm member shown in Fig. 7A;
Fig. 8A is a cross-sectional view showing the butted portion of the arm member shown in Figs. 7A and 7B before welding; and
Fig. 8B is a cross-sectional view showing the butted portion of the arm member shown in Figs. 7A and 7B after welding.

### DETAILED DESCRIPTION OF THE PREFERRED EMBODIMENTS

A butt joint structure according to the embodiments of the present invention will be explained with reference to the attached drawings.

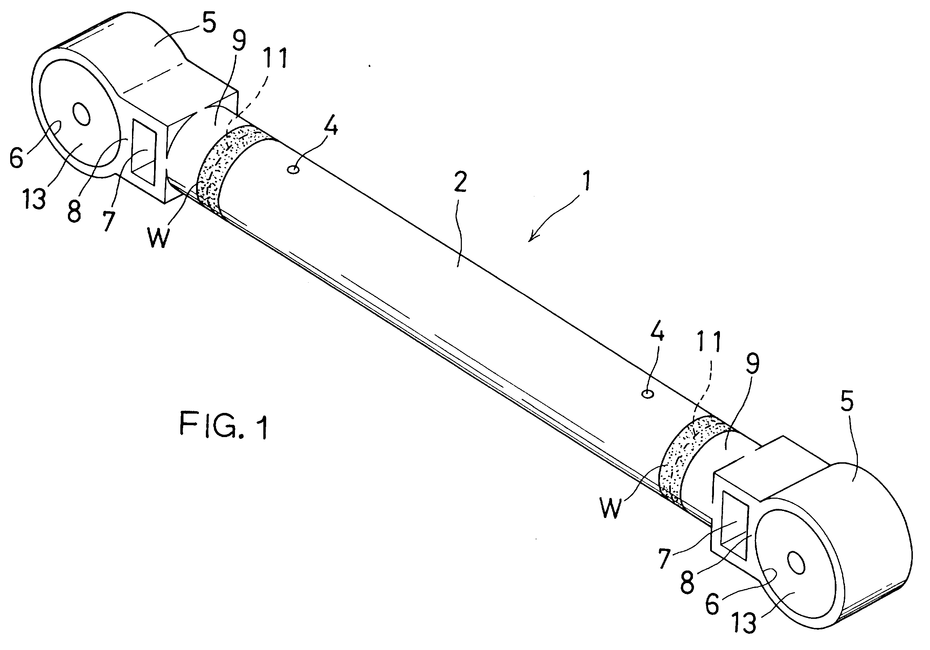

In Fig. 1, the reference numeral 1 denotes an arm member according to a first embodiment of the present invention. This arm member 1 is used for an automobile suspension arm such as an upper arm, a lower arm, a trailing arm and a torsion arm.

The arm member 1 includes a bar-shaped main body 2 having a certain length and a pair of generally cylindrical bush mounting portions 5, 5 each for mounting a vibro-isolating bush 13. Bush mounting portions 5, 5 are connected to both opposite ends of the main body 2. As will be described later, the bush mounting portion 5 has a connecting portion 9 integrally provided at a part of the outer surface thereof. The bush mounting portions 5, 5 are welded to both ends of the main body 2 via connecting portions 9, 9.

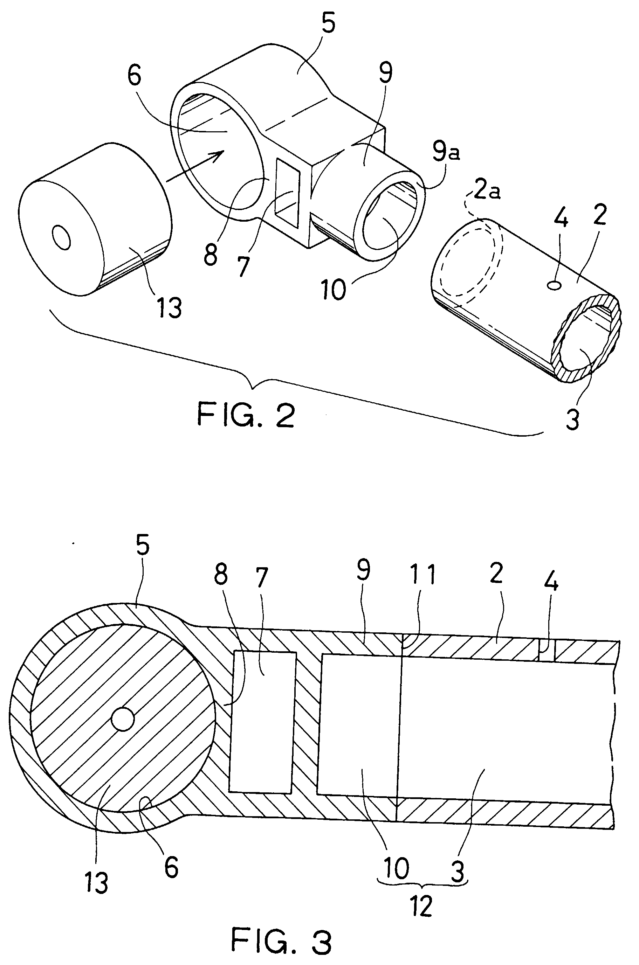

As shown in Fig. 2, the main body 2 is made of an aluminum extruded pipe member having a circular-cross sectional shape. The main body 2 has air releasing apertures 4, 4 each formed at the peripheral wall of the end portion of the maim body 2. The air releasing aperture 4 communicates an inside space 3 of the main body 2 with an outside, and has a small diameter (e.g., 1 mm ϕ).

The bush mounting portion 5 is made of an aluminum forged member, and has a bush mounting bore 6 of a circular cross-sectional shape. Fitted in the bush mounting bore 6 is a cylindrical vibro-isolating bush 13 having a rubber elastic portion. The bush mounting portion 5 also has a shock absorbing space 7 formed adjacent to the bush mounting bore 6 via a partition wall 8. The shock absorbing space 7 absorbs an impact load imparted to the bush 13 by allowing the deformation of the partition wall 8.

Furthermore, the bush mounting portion 5 has a connecting portion 9 of a circular cross-sectional shape integrally protruded from an outer surface of the bush mounting portion 5 by which the bush mounting portion 5 is connected to the main body 2.

At the central portion of the end 9a of the connecting portion 9, a concave portion 10 is formed. The concave portion 10 has an inner diameter generally the same as that of the end opening of the main body 2. The depth of the concave portion 10 is the same as the length of the connecting portion 9. In other words, the connecting portion 9 is formed to have a cylindrical shape. Furthermore, the connecting portion 9 has an outer diameter the same as that of the end portion of the main body 2 throughout the length of the connecting portion 9.

Thus, as shown in Fig. 3, when the end 9a of the connecting portion 9 is butted against the end 2a of the main body 2 with the concave portion 10 facing the end opening of the main body 2, a hollow portion 12 is formed by the concave portion 10 and the end opening of the main body 2 so as to cross the butted portion 11, and the end opening of the main body 2 is closed by the connecting portion 9. In addition, the inner and outer surfaces of the end portion of the main body 2 become flush with those of the connecting portion 9.

In this butted state, the butted portion 11 is welded so that the connecting portion 9 of the bush mounting portion 5 is connected to the end of the main body 2.

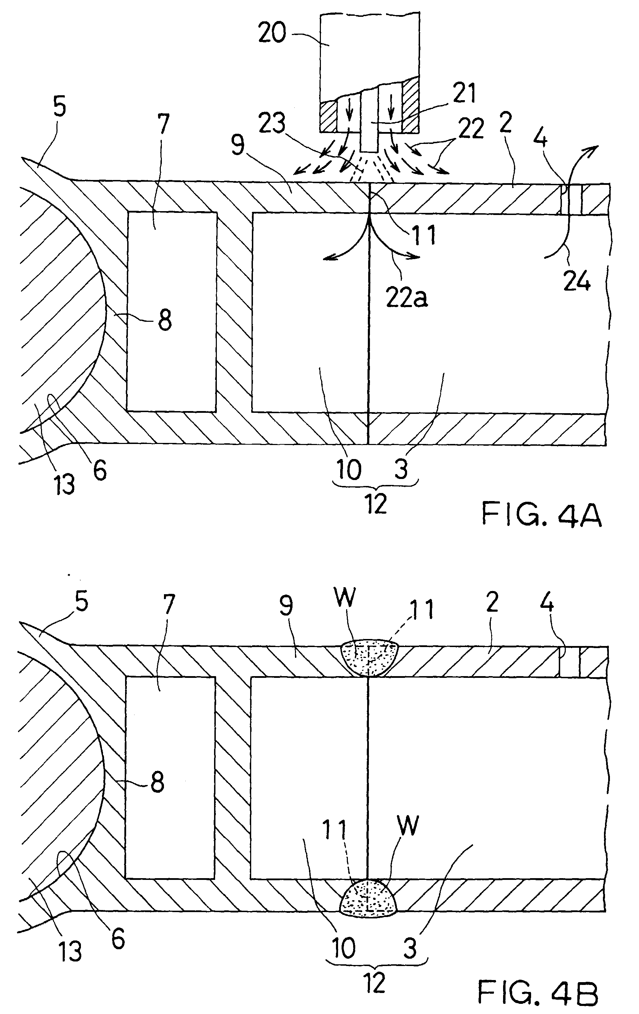

According to the first embodiment, the butted portion 11 is welded by a MIG welding (metal electro inert gas welding) which is one of fusion welding methods. The following is an explanation of the MIG welding process. In Fig. 4A, the reference numeral 20 denotes a cylindrical gas nozzle, a part of the MIG welding device, in which a wire electrode 21 as a welding material is disposed. The gas nozzle 20 jets shield gas (i.e., inner gas) to shield both the arc 23 and the molten metal. In this shielding state, the gas nozzle 20 is moved along the butted portion 11 while generating arcs 23 between the tip end of the wire electrode 21 and the butted portion 11. As a result, as shown in Fig. 4B, the butted portion 11 is welded along the whole length thereof. The reference numeral W denotes a welded portion formed at the butted portion 11.

As shown in Fig. 4A, some of the shield gas 22a is introduced into the hollow portion 12 through the butted portion 11 to push the air 24 in the hollow portion 12 out of the hollow portion 12 through the air releasing aperture 4. Thus, the air 24 confined in the hollow portion 12 is replaced with the shield gas 22a. This prevents the rear surface of the welded portion W from being oxidized, resulting in a good welded portion in which welding defaults such as blowholes are extremely decreased.

The welding of the butted portion 11 can be performed by a fusion welding method including an arc welding such as a MIG welding or a TIG welding, a plasma welding, a laser welding and an electro beam welding. Even in cases where the butted portion 11 is welded by the aforementioned fusion welding method, since the hollow portion 12 is formed inside the butted portion 11 according to the present invention, a generation of root cracks at the welding portion W can be prevented.

Since the main body 2 is made of a pipe member, the arm member 1 can be light in weight. Furthermore, both the main body 2 and the bush mounting portion 5 are made of aluminum, the arm member 1 is extremely light in weight.

In addition, as mentioned above, since the welding of the butted portion 11 is performed in a state that the hollow portion 12 is formed inside (i.e., behind) the butted portion 11, the welded portion W has almost no root crack, resulting in an arm member having an excellent welding status.

Furthermore, since the welding of the butted portion 11 is performed in a state that the air in the hollow portion 12 is replaced with the shield gas 22a, the welded portion W has almost no blowhole, resulting in an arm member having an excellent welding status. When the bush mounting portions 5, 5 are connected to opposite ends of the main body 2 in order to weld the butted portion 11, an closed hollow portion 12 is formed in the arm member 1. This easily causes an oxidization of the rear surface of the welded portion W. However, in this embodiment, since the air releasing aperture 4 is formed at a part of the peripheral wall of the main body 2, the air confined in the hollow portion 12 can be easily replaced with the shield gas 22.

Thus, in the arm member 1, the main body 2 and the bush mounting portion 5, 5 are firmly connected each other. In other words, the arm member 1 has excellent strength reliability and is extremely light in weight.

Although the above explanation is directed to the first embodiment, the present invention is not limited to the above, and can be modified in various manners.

For example, the arm member according to the present invention, the main body 2 may be made of a pipe member of a rectangular cross-sectional shape. The end 2a of the main body 2 and the end 9a of the connecting portion 9 may have a beveling of a V-shape or a U-shape, respectively. The air releasing aperture 4 may be formed in a peripheral wall of the connecting portion 9.

Furthermore, in the arm member according to the present invention, the bush mounting portion 5 may be provided at one end of the main body 2. The main body 2 may be a pipe member made of iron, stainless, steel or the like. Similarly, the bush mounting portion 5 and the connecting portion 9 may also be a pipe member made of iron, stainless, steel or the like.

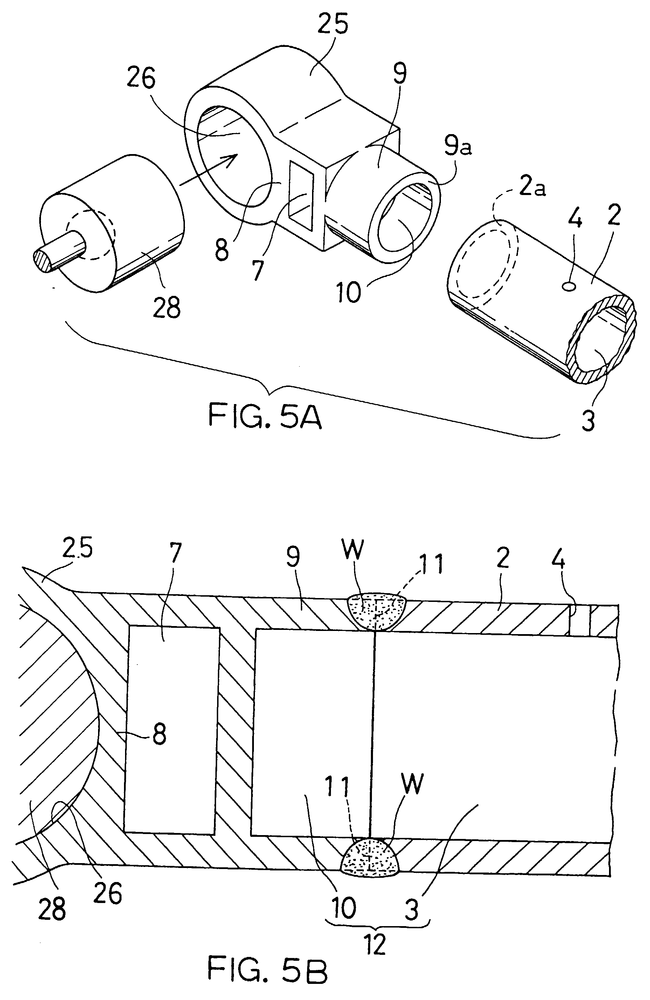

As shown in Figs. 5A and 5B illustrating an arm member according to a second embodiment of the present invention, the arm member 1 may have a main body 2 and a ball joint portion 25 integrally provided with a connecting portion 9 for mounting a ball joint 28. The ball joint portion 25 is connected to one end of the main body 2. The ball joint portion 25 is of a generally cylindrical shape, and has a ball joint holding bore 26 in which the ball joint 28 is forcibly fitted.

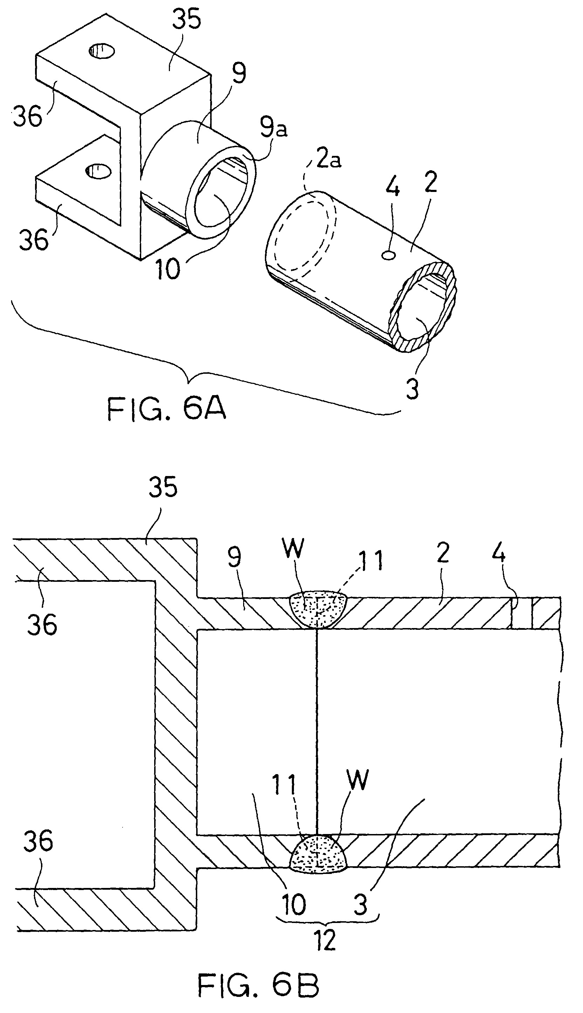

As shown in Figs. 6A and 6B illustrating a third embodiment, the arm member according to the present invention may have a yoke portion 35 having a pair of fixing member 36, 36 disposed in a parallel relation. The yoke portion 35 is connected to an end of the main body 2 via a connecting portion 9.

### 〈EVALUATION〉

Next, concrete examples of the present invention will be explained as follows.

In the following examples 1 and 2, the arm member is the same as in the first embodiment shown in Fig. 1. In these examples 1 and 2, the main body 2 is an extruded pipe member made of JIS (Japanese Industrial Standard ) A6061-T6 aluminum alloy. The end portion of the aforementioned pipe member has a dimension of an outer diameter of 30 mm x a thickness of 3 mm. The connecting portion 9 of the bush mounting portion 5 is made of a JIS A6061 forged aluminum alloy, and has the same dimension as that of the end portion of the aforementioned pipe member, i.e., an outer diameter of 30 mm x a thickness of 3 mm.

On the other hand, in a comparative example, the arm member is the same as in the related art shown in Fig. 7A. In this comparative example 1, the main body 52 is an extruded pipe member made of JIS A6061-T6 aluminum alloy which is the same as in the examples 1 and 2. The end portion of the aforementioned pipe member has a dimension of an outer diameter of 30 mm x a thickness of 3 mm. The bush mounting portion 53 and the connecting portion 55 are made of a JIS A6061 forged aluminum alloy, respectively, and has the same dimension as that of the end portion of the main body 52, i.e., an outer diameter of 30 mm. The fitting portion 56 has an outer diameter of 24 mm the same as the inner diameter of the end portion of the main body 52.

The welding of the butted portion in each of the arm member of the examples 1, 2 and the comparative example 1 were performed by a MIG welding method. The welding conditions were as follows:
Current 160A
Voltage 24V
Welding rod 5356WY (wire diameter: 1.2 mmΦ)
Feeding speed 80 cm/min
Shield gas jet amount 20 litters/min.

### 〈Example 1〉

The butted portion 11 was welded in a state that the air releasing apertures 4, 4 were formed in the peripheral wall of the opposite end portions of the main body 2.

### 〈Example 2〉

The butted portion 11 was welded in a state that no air releasing aperture was formed in the peripheral wall of the opposite end portions of the main body 2.

### 〈Comparative Example 1〉

The butted portion 58 was welded in a state that the fitting portion 56 was fitted in the end opening of the main body 52.

Tensile strength σ_{B} (N/mm²) of each welded portion of the arm members of Example 1, Example 2 and Comparative Example 1 was measured. The results are shown in Table 1.

**Table 1**

| | Air releasing aperture | Tensile strength σ_{B} (N/mm²) |
|---|---|---|
| Example 1 | Yes | 240 |
| Example 2 | No | 230 |
| Comparative Example 1 | No | 170 |

As shown in Table 1, the arm members of Examples 1 and 2 have larger tensile strength σ_{B} as compared with that of Comparative Example 1. This reveals that Examples 1 and 2 have enhanced strength reliability. Furthermore, compared with Example 2, Example 1 has larger tensile strength σ_{B}. This reveals that the arm member according to Example 1 has an excellent strength reliability.

Furthermore, each welded portion of the arm members according to Example 1, Example 2 and Comparative Example 1 was examined visually. Although the welded portion of the arm member according to Comparative Example 1 had numerous minute root cracks, the welded portion of the arm member according to Examples 1 and 2 had almost no root crack. Especially, in the welded portion of the arm member according to Example 1, almost no blowhole due to an oxidization of the rear surface of the welded portion was found. Thus, the welding status of the arm member according to Example 1 was found to be excellent.

As mentioned above, the arm member according to the present invention includes a main body made of a metallic pipe having an end, a metallic joining portion integrally provided with a connecting portion having an end in which a concave portion is formed, wherein the end of connecting portion is butted to the end of the main body with the concave portion facing an end opening of the main body to form a butted portion, and wherein the butted portion is welded along a whole circumference thereof, whereby the joining portion is joined to the main body.

With this structure, in a state that the end of the connecting portion is butted against the end of the main body, a hollow portion is formed by the concave portion of the connecting portion and the end opening of the main body so as to cross the butted portion. Therefore, the hollow portion impedes a generation of root cracks at a welded portion of the butted portion, resulting in enhanced connecting strength. Furthermore, since the main body is made of a pipe member, the arm member is light in weight.

According to the present invention, even if the butted portion is welded by a fusion welding such as an arc welding, a plasma welding, a laser welding or an electron beam welding, since the hollow portion is formed so as to cross the butted portion, a generation of root cracks can be prevented at the welded portion.

In cases where the arm member is provided with an air releasing aperture at a part of a peripheral wall of the connecting portion or the main body so as to communicate the hollow portion with an outside, the butted portion is welded in a state that the air in the hollow portion is replaced with the shield gas. Thus, a welding default such as a blowhole will not be generated at the welded portion, which results in increased high joining strength.

In cases where the pipe member is made of an aluminum or its alloy, a lightweight arm member can be provided.

Furthermore, in cases where the joining member is made of an aluminum or its alloy, a lightweight arm member can be provided.

The present invention claims a priority based on Japanese Patent Application No. H10-316399 filed on November 6, 1998, the content of which is incorporated hereinto by reference in its entirety.

The terms and descriptions in this specification are used only for explanatory purposes and the present invention is not limited to these, but many modifications and substitutions may be made without departing from the spirit of the scope of the present invention which is defined by the appended claims.

## Claims

1. An arm member, comprising:
a main body made of a metallic pipe having an end;
a metallic joining portion integrally provided with a connecting portion having an end in which a concave portion is formed,
wherein said end of said connecting portion is butted to said end of said main body with said concave portion facing an end opening of said main body to form a butted portion, and
wherein said butted portion is welded along a whole circumference thereof, whereby said joining portion is joined to said main body.

2. The arm member as recited in claim 1, wherein said butted portion is welded by a fusion welding including an arc welding, a plasma welding, a laser welding and an electron beam welding.

3. The arm member as recited in claim 1, wherein an air releasing aperture is provided at a part of a peripheral wall of said connecting portion or said main body so as to communicate a hollow portion formed by said concave portion and the end opening of said main body with an outside.

4. The arm member as recited in claim 1, wherein at least an end of said connecting portion has an outer diameter generally the same as that of the main body.

5. The arm member as recited in claim 1, wherein an end of said concave portion has an inner diameter generally the same as that of the end opening of said main body.

6. The arm member as recited in claim 1, wherein said joining portion is provided with a bush mounting portion for mounting a bush.

7. The arm member as recited in claim 1, wherein said joining portion is provided with a ball joint mounting portion for mounting a ball joint.

8. The arm member as recited in claim 1, wherein said joining portion is provided with a yoke portion.

9. The arm member as recited in claim 1, wherein said pipe member is made of an aluminum or its alloy.

10. The arm member as recited in claim 1, wherein said joining portion is made of an aluminum or its alloy.
